# EUROPÄISCHE PATENTSCHRIFT

(11) **EP 0 897 235 B1**
(45) Veröffentlichungstag und Bekanntmachung des Hinweises auf die Patenterteilung: **11.05.2005**
(21) Anmeldenummer: 98114225.0
(22) Anmeldetag: 29.07.1998
(51) Int. Cl.: H04M 1/00, H04M 1/725

(54) **Konfigurierbare Telekommunikationsendeinrichtung**
Configurable telecommunication terminal
Terminal de télécommunication configurable

(30) Priorität: 13.08.1997 DE 19735106
(43) Veröffentlichungstag der Anmeldung: 17.02.1999
(73) Patentinhaber: SIEMENS AKTIENGESELLSCHAFT, 80333 München (DE)
(72) Erfinder: Kern, Ralf, 46399 Bocholt (DE)

(56) Entgegenhaltungen:
- DE-A- 19 538 842
- DE-U- 9 109 487
- GB-A- 2 289 555
- US-A- 5 644 628

## Beschreibung

Die vorliegende Erfindung betrifft eine konfigurierbare Telekommunikationsendeinrichtung, sowie ein Verfahren zum Konfigurieren einer Telekommunikationsendeinrichtung.

Bei einer konfigurierbaren Telekommunikationsendeinrichtung ist grundsätzlich zwischen der eigentlichen Nutzung, nämlich als Endgerät eines Telekommunikationsnetzes, und dem Konfigurieren des Gerätes zu unterscheiden. Das Konfigurieren dient dazu, die Merkmale des Endgerätes hinsichtlich seiner Nutzung gemäß den Wünschen des Benutzers einzustellen, und findet gewöhnlich während einer Nutzungspause des Endgerätes statt. Als konfigurierbare Merkmalskategorien des Nutzungsbetriebes kommen hierbei in Frage:
- die Basisfunktion, d.h. mit welchem Telekommunikationssystem, z.B. dem analogen Telefonnetz, die Telekommunikationsendeinrichtung kommuniziert;
- die Betriebsart, z.B. als Telefon, Telefax-Gerät oder Internet-Browser-Terminal, die sich einer spezifischen Datencodierung und/oder spezifischer Protokolle bedient und andere Betriebsarten weitgehend ausschließt, wenn auch in einem Endgerät bei Bedarf zwischen verschiedenen Betriebsarten umgeschaltet werden kann;
- die Betriebsfunktionen einer Betriebsart, z.B. die Anrufbeantworterfunktion eines Telefons;
- der Zugriff auf die Betriebsfunktionen, also die Art und Weise wie die Betriebsfunktionen ausgelöst und gesteuert werden, z.B. durch Tastendruck, Einstellen auf einer Skala oder Spracheingabe;
- sekundäre Eigenschaften, die sich nur mittelbar auf den Telekommunikationsbetrieb des Endgerätes beziehen, wie z.B. die Farbe des Endgerätes oder ein auf diesem angebrachtes Firmenlogo.

Die Telekommunikationsnetze der hier besprochenen Endgeräte können jeglicher Art sein, wie beispielsweise das analoge Telefonnetz, ISDN oder Telekommunikationsanlagen, aber auch Funknetze wie DECT oder GSM. Entsprechend ist unter dem Anschluß eines Endgerätes an eine Telekommunikationseinrichtung die Etablierung einer Verbindungsmöglichkeit zu verstehen, z.B. mittels einer Leitung, über Funk oder Infrarot, wobei jedenfalls auch die Einrichtung der entsprechenden Anschlußmerkmale, z.B. einer Rufnummer, eingeschlossen ist.

Bei Telekommunikationsendeinrichtungen, wie sie zur Zeit am Markt sind, ist man, sobald man sich für ein bestimmtes Endgerät entschieden hat, auch bei konfigurierbaren Geräten zumeist an eine fest umrissene Funktionalität und ein festes Design der Bedienoberfläche gebunden. Dies hat zur Folge, daß die Möglichkeit der Anpassung an besondere, individuelle Erfordernisse sowie der Erweiterung der Funktionalität stark eingeschränkt oder in gewissen Bereichen überhaupt ausgeschlossen ist. Einige Telekommunikationsendeinrichtungen sind durch Zusatzmodule in Form von Einsteckkarten bzw. -modulen erweiterbar. Insofern das Konfigurieren von Leistungsmerkmalen eines solchen Endgerätes möglich ist, ist eine Anzahl vorbestimmter Funktionstasten für die Programmierung von Betriebsfunktionen vorgesehen. Gestalt und Ort dieser Funktionstasten auf dem Gerät sind fest und das Konfigurieren erfolgt infolge der eingeschränkten Eingabemöglichkeiten auf einem solchen Endgerät gewöhnlich mittels umständlicher und schwer zu merkender Befehlsfolgen.

Eine Variabilität hinsichtlich der Art und Gestaltung der Bedienungselemente, über die die verschiedenen Funktionen des Endgerätes angesprochen und gesteuert werden, wird bisher nur durch das Angebot verschiedener Telekommunikationsendeinrichtungen erreicht, die sich dann aber in der Regel auch in ihrer Funktionalität unterscheiden. Vielfach entsteht jedoch der Wunsch, die Elemente der Bedienoberfläche, z.B. die Wähltasten oder Anzeigefelder, in Hinsicht auf ihren Ort an dem Endgerät, Farbe, Form usw. individuell einzurichten. Auch das Erscheinungsbild des Gerätes selbst, z.B. seine Farbe, kann nur innerhalb eng gesteckter Grenzen, etwa des vom Hersteller angebotenen Farbensortiments, gewählt werden, oder es müssen, für besondere Kennungen wie etwa ein firmeneinheitliches Design oder ein Firmenlogo, entsprechende Kennzeichen dem Gerät z.B. eigens aufgeklebt oder auf ähnliche Weise hinzugefügt werden. Eine nachträgliche Änderung der Gestaltung eines Endgerätes ist jedoch bisher schwierig oder gänzlich unmöglich, sodaß es meist einfacher ist, das Endgerät als solches auszutauschen.

Zwar wäre es prinzipiell denkbar und naheliegend, die gewünschte Variabilität einer Telekommunikationsendeinrichtung dadurch zu erreichen, daß ein Computer z.B. mit Treibern für ein Telekommunikationsnetz ausgerüstet und mit einem Programm ausgestattet wird, sodaß er als Telekommunikationsendeinrichtung fungieren könnte. Die Lösung, einen Computer überhaupt als Telekommunikationsendeinrichtung zu betreiben, hat jedoch nicht nur die Nachteile, unnötige hohe Kosten der verwendeten Komponenten und des Installationsaufwandes zu verursachen sowie viel Raum einzunehmen; sie ist schon allein deshalb problematisch, weil die eigentliche Funktion eines Computers als Anlage zur Verarbeitung digitaler Daten mit der eines Telekommunikationsgerätes nur wenig gemeinsam hat.

Die DE 195 38 842 A1 betrifft ein Mobiltelefon, das mit einer Datenverarbeitungsanlage durch eine Datenübertragungsstrecke verbindbar ist. Diese Datenübertragungsstrecke wird zur Übertragung von Gesprächsteilnehmerdaten und/oder Daten zur Konfiguration des Mobiltelefons von der Datenverarbeitungsanlage in den Adress- bzw. Konfigurationsdatenspeicher des Mobiltelefons verwendet.

Die GB 2 289 555 A offenbart ein Telekommunikationsgerät mit einer PCMCIA-Karte und einer Kamera-Einheit; Eingabemittel wie Tastatur oder Digitalisierfeld können abnehmbar vorgesehen sein.

Es ist eine Aufgabe der vorliegenden Erfindung, eine Telekommunikationsendeinrichtung zur Verfügung zu stellen, deren Funktionalität vom Benutzer des Endgerätes individuell konfiguriert werden kann, wobei dem Benutzer größtmögliche Freiheit hinsichtlich der Wahl der angebotenen Betriebsarten und -funktionen sowie besonders der Gestaltung der Bedienoberfläche und des Erscheinungsbildes des Endgerätes zukommen soll. Dies soll gleichzeitig bei möglichst geringem technischen Aufwand der seitens des Herstellers gelieferten Betriebsmittel bzw. Komponenten sowie ohne besondere Vorkenntnisse des Benutzers durchführbar sein. Es ist eine weitere Aufgabe der vorliegenden Erfindung, ein Verfahren zum Konfigurieren einer Telekommunikationsendeinrichtung anzubieten, welches die bereits genannten Anforderungen erfüllt.

Diese Aufgaben werden ausgehend von einer Telekommunikationsendeinrichtung der eingangs beschriebenen Art gelöst, welche programmierbare Bausteine für die Ausführung ihrer Betriebsfunktionen und eine Programmierschnittstelle aufweist, das mit einem Programmierterminal, z.B. einem Computer, verbindbar und dazu eingerichtet ist, auf vom Benutzer am Programmierterminal eingegebene und über die Verbindung übermittelte Befehle hin die programmierbaren Bausteine zu konfigurieren, wobei ein Ein/Ausgabefeld hinsichtlich Art, Ort und Gestaltung von auf ihm dargestellte Ein/Ausgabeelemente über die Programmierschnittstelle konfigurierbar ist.

Die Lösung gemäß der Erfindung ermöglicht dem Benutzer des Endgerätes, eine individuelle bzw. firmenspezifische Funktionalität dadurch einzurichten, daß mit Hilfe einer Konfigurier-Software die Hardware und Software des Endgerätes den individuellen Bedürfnissen und Wünschen des Benutzers angepaßt wird. Durch die weitgehende Auslagerung der hierzu erforderlichen Programmierlogik aus der Telekommunikationsendeinrichtung in das Programmierterminal kann der technische Aufwand in dem Endgerät deutlich verringert werden. Weiters sind die Betriebsmittelresourcen des Endgerätes nicht an bestimmte, möglicherweise ungenutzte Aufgaben gebunden, sondern können flexibel und gezielt für die vom Benutzer verwendeten Funktionen eingesetzt werden.

In einer bevorzugten Ausführung, die die Bedienoberfläche in die Gestaltung des Endgerätes miteinbezieht, weist die Telekommunikationsendeinrichtung ein über die Programmierschnittstelle konfigurierbares Ein/Ausgabefeld auf.

Es ist hierbei günstig und einer einfachen Realisierung zuträglich, wenn das konfigurierbare Ein/Ausgabefeld zumindest teilweise als Sensorbildschirm, Sensorfeld oder Bildschirm ausgebildet ist.

Bei einer anderen günstigen und einfachen zu realisierenden Variante ist zumindest ein Teil des konfigurierbaren Ein/Ausgabefeldes als Bildschirm oder Sensorbildschirm in Kombination mit einem Eingabegerät für relative Koordinaten, z.B. einer Maus, ausgebildet.

In einer vorteilhaften und zweckmäßigen Ausführung weist die Telekommunikationsendeinrichtung einen Speicher zur Aufnahme von Daten und Steuerbefehlen für die programmierbaren Bausteine auf.

Es ist weiters günstig, wenn die für den Betrieb in einer bestimmten Betriebsart, z.B. als Telefax-Gerät, verwendeten Bauteile, z.B. Papiereinzug und Drucker, abnehmbar gestaltet sind, sodaß sie bei einer Umstellung bzw. Umprogrammierung auf eine andere Betriebsart hinzufügbar bzw. entfernbar und nach allfälligem Konfigurieren der Telekommunikationsendeinrichtung in Betrieb zu nehmen sind. Dies ermöglicht dem Benutzer, auch von der Austattung der Telekommunikationsendeinrichtung abhängige Merkmale nach seinen Wünschen und Erfordernissen zu ändern, und gestattet es, Betriebsmittelresourcen besser auszunutzen.

In einer für den Benutzer und den Hersteller gleichermaßen zweckmäßigen Ausgestaltung dieser Variante sind die Schnittstellen zu den abnehmbaren Bauteilen so ausgebildet, daß jedes abnehmbare Bauteil unabhängig von seiner Funktion an einem beliebigen Schnittstellenplatz der Telekommunikationsendeinrichtung hinzugefügt werden kann.

In einer weiteren vorteilhaften Variante ist das Ein/Ausgabefeld der Telekommunikationsendeinrichtung oder ein Teil davon abnehmbar gestaltet und gegen ein anderes Ein/Ausgabefeld austauschbar.

Eine weitere, für den Benutzer komfortable Ausgestaltungsform weist eine Bild/Ton-Ausgabeeinheit für Informationen und Meldungen zu den Betriebsarten und -funktionen der Telekommunikationsendeinrichtung an den Benutzer auf.

Eine andere Ausführung, die die Bedienung der Endeinrichtung stark vereinfacht, enthält eine Sprachausgabeeinheit für Informationen und Meldungen zu den Betriebsarten und -funktionen der Telekommunikationsendeinrichtung an den Benutzer.

Eine weitere für den Benutzer einfach zu bedienende Variante besitzt eine Erkennungseinheit für Eingaben des Benutzers mittels Sprache und/oder Gestik und/oder Handschrift.

Die oben dargestellte Aufgaben werden weiters durch ein Verfahren der eingangs beschriebenen Art gelöst, bei dem die Telekommunikationsendeinrichtung mit einem Programmierterminal, z.B. einem mit Konfigurier-Software ausgerüsteteten Computer, über eine in der Telekommunikationsendeinrichtung eingerichteten Schnittstelle verbunden wird und der Benutzer das Konfigurieren der konfigurierbaren Bauteile der Telekommunikationsendeinrichtung über die genannte Verbindung von dem Programmierterminal aus durchführt, wobei ein Ein/Ausgabefeld hinsichtlich Art, Ort und Gestaltung von auf ihm dargestellten Ein/Ausgabeelementen über die Programmierschnittstelle konfiguriert werden.

Das Verfahren gemäß der Erfindung ermöglicht es dem Benutzer des Endgerätes die Funktionalität in möglichst großem Umfang zu gestalten, wobei der technische Aufwand in dem Endgerät und die vom Benutzer verlangten Vorkenntnisse vergleichsweise klein gehalten werden kann.

Es ist hierbei in der Praxis besonders vorteilhaft, wenn die Betriebsfunktionen der Telekommunikationsendeinrichtung und/oder der Zugriff auf die Betriebsfunktionen konfiguriert werden.

In einer weiteren nützlichen Variante wird die Basisfunktion und/oder Betriebsart der Telekommunikationsendeinrichtung konfiguriert.

In einer anderen bevorzugten und für den Benutzer komfortablen Ausgestaltungsform führt der Benutzer die Konfigurierung unter Verwendung einer graphischen Bedienoberfläche mit Hilfe von Funktionsblöcken durch.

Es ist hierbei für den Benutzer besonders anschaulich und verringert den Konfigurieraufwand seitens des Benutzers, wenn die Funktionsblöcke verschiedenen Basisfunktionen, wie z.B. ISDN, Betriebsarten, wie z.B. als Telefax-Gerät, Betriebsfunktionen, wie z.B. Anrufwiederholung, Ein/Ausgabefunktionen oder zusätzlichen, nur mittelbar dem Telekommunikationsbetrieb zugeordneten Eigenschaften der Telekommunikationsendeinrichtung entsprechen.

In einer weiteren Variante werden die für den Betrieb in einer bestimmten Betriebsart der Telekommunikationsendeinrichtung verwendeten Bauteile entfernt bzw. hinzugefügt und die Telekommunikationsendeinrichtung hinsichtlich des Betriebs dieser Bauteile konfiguriert. Dies ist für den Benutzer ebenso wie für den Hersteller besonders nützlich, da diese dann nicht schon bei der Auslieferung mögliche Verwendungsweisen des Endgerätes vorausplanen müssen.

Bei einer anderen, ebenso vorteilhaften Variante wird das Ein/Ausgabefeld der Telekommunikationsendeinrichtung oder ein Teil davon abgenommen und gegen ein anderes Ein/Ausgabefeld ausgetauscht.

In einer besonders benutzerfreundlichen Version des Verfahrens wird eine Bild/Ton-Ausgabeeinheit für Informationen und Meldungen zu den Betriebsarten und -funktionen der Telekommunikationsendeinrichtung an den Benutzer eingerichtet und/oder konfiguriert.

Bei einer anderen vorteilhaften Variante des Verfahrens wird eine Sprachausgabeeinheit für Informationen und Meldungen zu den Betriebsarten und -funktionen der Telekommunikationsendeinrichtung an den Benutzer eingerichtet und/oder konfiguriert.

Die Erfindung wird im folgenden zusammen mit weiteren Vorzügen anhand eines Ausführungsbeispieles, das die In-System-Programmierung von Endgeräten für das analoge Telefonnetz beschreibt, und mit Hilfe der beigefügten Figuren näher erläutert. Die Figuren stellen jeweils dar:
Fig. 1 die Bedienoberfläche eines beispielhaften, erfindungsgemäßen Telefongerätes;
Fig. 2a die wesentlichen Komponenten des in Fig. 1 dargestellten Telefongerätes und die Verknüpfung dieser Komponenten während der Nutzung;
Fig. 2b die in Fig. 2a gezeigten Komponenten während der Konfigurierung des Telefongerätes mit Hilfe eines Computers; und
Fig. 3 ein Beispiel der am Computerbildschirm dargestellten Bildschirmansicht bei dem Konfigurieren der Funktionalität des Telefongerätes.

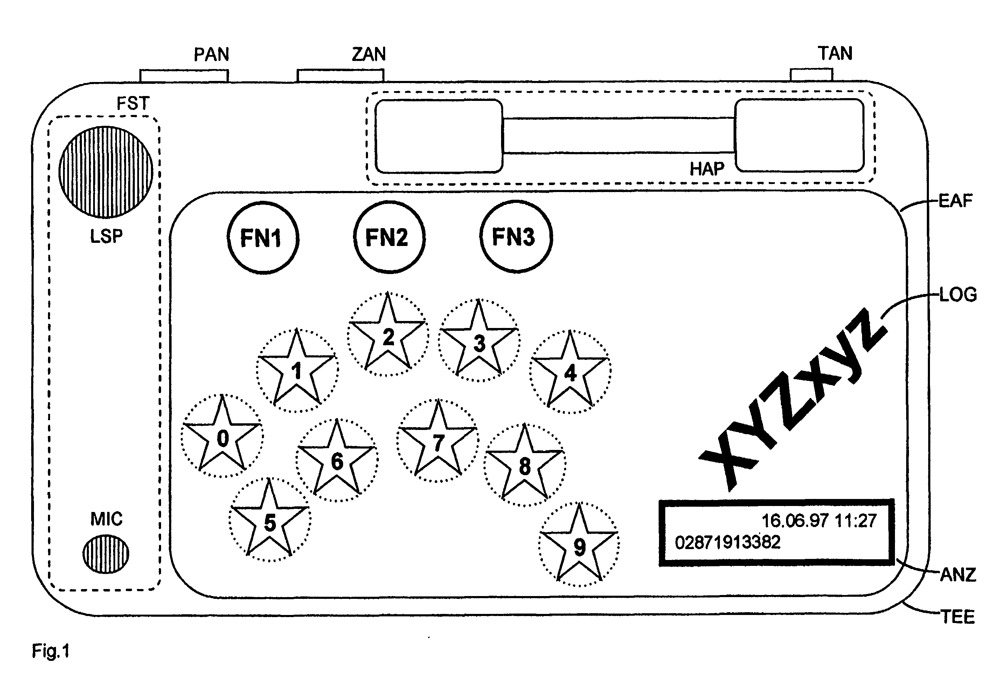

Als Beispiel einer erfindungsgemäßen Telekommunikationsendeinrichtung TEE ist in Fig. 1 eine Ansicht eines an das analoge Telefonnetz anschließbaren, individuell programmierbaren Telefongerätes dargestellt. Den überwiegenden Teil der für den Benutzer sichtbaren Oberfläche des Gerätes nimmt das Ein/Ausgabefeld EAF ein, das hier als Sensorbildschirm realisiert ist. Der Sensorbildschirm ersetzt sowohl das Tastenfeld als auch ein allfälliges Anzeigefeld sonst üblicher Telefongeräte; darüberhinaus kann er bei Bedarf weitere Aufgaben übernehmen, wie unten noch ausgeführt wird. Neben dem Ein/Ausgabefeld sind auf dem Telefongerät ein Lautsprecher LSP und ein Mikrofon MIC zu sehen, die beide zum Freisprechteil FST des Telefongerätes gehören, sowie ein Handapparat HAP, der nach üblicher Bauart eine Hörergabel und einen über ein Kabel an das Telefongerät angeschlossenen Hörer umfaßt. Das Freisprechteil FST einerseits und der Handapparat HAP andererseits haben die gleiche Funktion, und der Benutzer kann, z.B. durch Berührung einer Funktionstaste FN1, zwischen diesen zwei Funktionsgruppen umschalten oder auch beide gleichzeitig aktivieren. Schließlich finden sich am Gerät noch die Telefonnetz-Anschlußbuchse TAN, an die zumindest während der Nutzung des Telefongerätes ein Telefonkabel des analogen Telefonnetzes TKN angeschlossen ist, sowie die Programmier-Anschlußbuchse PAN. Letztere ist günstigerweise als bei Computern übliche Schnittstelle, z.B. V.24, ausgebildet und wird für das Konfigurieren des Telefongerätes TEE verwendet, um eine Verbindung zu einem Computer oder einem Computernetz herzustellen, von dem aus der Benutzer die Konfiguration des Telefongerätes durchführt.

Auf dem Sensorbildschirm EAF sind verschiedene Ein/Ausgabe-Elemente dargestellt, deren Funktionen durch die Konfiguration des Telefongerätes bestimmt sind. Bei dieser Art der Implementierung handelt es sich z.B. um ein firmenspezifisch konfiguriertes Endgerät, welche an das firmeneigene Telefonsystem angeschlossen ist. Bei der in Fig. 1 dargestellten Bildschirmanzeige z.B. fungieren die sternförmigen Felder 0 bis 9 als Telefontasten und lösen bei Berührung des Bildschirms an der Stelle der angezeigten Tasten die jeweils entsprechende Zifferneingabe bzw. beim Wählvorgang das jeweilige Wählsignal. Ein Anzeigefeld ANZ dient zur Darstellung der Uhrzeit und des Datums sowie der Rufnummer des angewählten oder anrufenden Teilnehmers. Zusätzlich können auch feste oder nach vorgegebenem Muster wechselnde Bilder auf dem Bildschirm dargestellt werden, wie z.B. hier ein in den Bildschirmhintergrund integriertes Firmenlogo LOG; weiters kann auch ein Bilschirmschoner eingerichtet werden. Art, Ort und Gestaltung dieser Elemente sind lediglich durch die Konfiguration des Gerätes festgelegt und können beliebig nach den Wünschen des Benutzers eingestellt sein, auch wenn aufgrund der Betriebsart natürlich bestimmte Typen und Anordnungen von Ein/Ausgabe-Elementen als zweckmäßig oder zumindest nützlich erscheinen, wie z.B. an der Anordnung und Form der Telefontasten 0 bis 9 anstelle der sonst üblichen Gestaltung als im wesentlichen rechteckige Felder in einem Rechteckraster ersichtlich ist. Dadurch läßt sich z.B. eine ergonomische Gestaltung der Bedienoberfläche leicht und nach individuellen Ansprüchen verwirklichen. Freilich kann der Bereich eines Anzeigeelements verschieden sein von dem bei Berührung aktivierten Tastenbereichs; z.B. kann eine Telefontaste als Stern wie die Taste 0 in Fig. 1 dargestellt sein, aber der berühraktive Bereich ist der den Stern umschließende Kreis.

Hierbei ist anzumerken, daß die Realisierung des Ein/Ausgabefeldes als Sensorbildschirm nur eine Möglichkeit unter vielen ist. Ebenso eignet sich z.B. ein Bildschirm in Verbindung mit einer sogenannten Maus oder einem ähnlichen Gerät zur Eingabe von Koordinaten, z.B. einem Trackball oder einem Touchpad. Auch die Kombination einer LCD-Anzeige mit einem Tastenfeld ist in vielen Fällen schon ausreichend. Darüberhinaus können sämtliche genannten Komponenten gleichzeitig an dem Endgerät vorhanden sein und die Ein/Ausgabefunktionen auf diese Komponenten verteilt sein. Welche Komponente jeweils verwendet wird, ist wiederum durch die Konfiguration des Endgerätes festgelegt.

Gleiches gilt für das Beispiel des Freisprechteils und des Handapparates, für die weitere Alternativen eine über Kabel oder schnurlos verbundene Hör- bzw. Sprechkapsel oder eine Sprechgarnitur sind: Eine dieser Komponenten könnte ebenso einfach fortgelassen werden; das Vorhandensein redundanter Komponenten dient dem Komfort des Benutzers oder ermöglicht besondere Anwendungsfälle - etwa in diesem Falle das Teilnehmen verschiedener Personen an demselben Gespräch in möglicherweise verschiedenem Umfang.

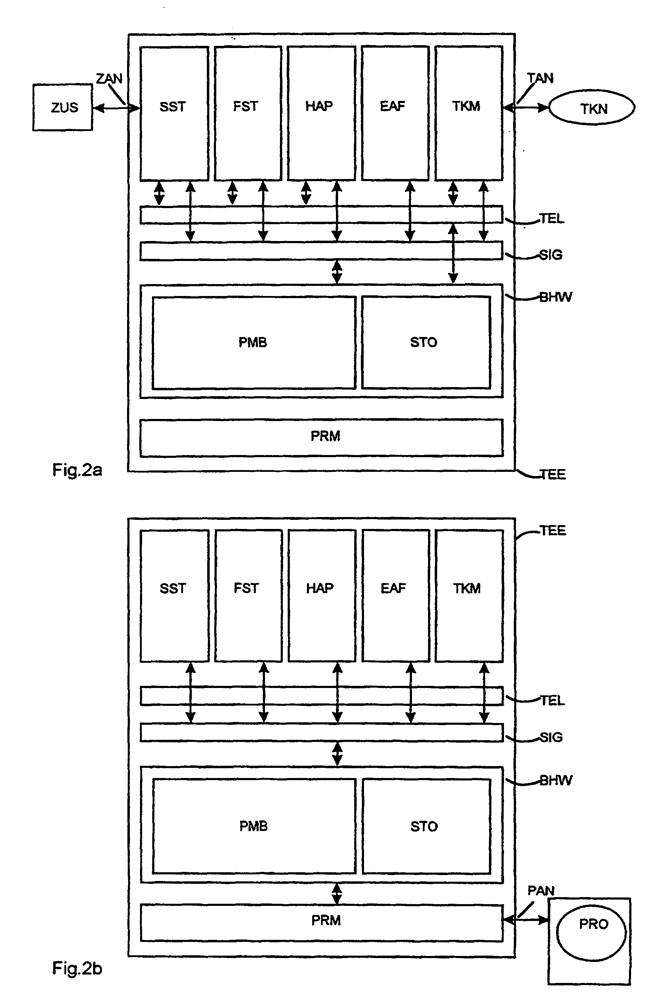

Die Blockschaltbilder der Fig. 2 zeigen die wesentlichen Komponenten des individuell programmierbaren Telefongerätes, wobei die Pfeile der Fig. 2a bei der Nutzung des Gerätes ausgetauschte Signale symbolisieren, wogegen Fig. 2b den Signalaustausch während eines Konfiguriervorganges zeigt. Das Freisprechteil FST, der Handapparat HAP und der Sensorbildschirm EAF sind bereits beschriebenen worden. Das als Telekommunikationsmodul TKM bezeichnete Modul ist das Empfänger/Sendeteil des Endgerätes, das die Kommunikation mit dem Telekommunikationsnetz TKN, einschließlich allenfalls nötiger Konversionen auf netzspezifische Datenformate, Protokolle usf. durchführt. Im Beispiel des Telefongerätes ist das Telekommunikationsmodul für das analoge Telefonnetz ausgelegt und enthält neben Verstärkern z.B. einen Frequenzsignalgeber für die Erzeugung von Wählsignalen und eine Einrichtung zur Erkennung eines einlangenden Rufsignals. Die Komponenten der Bedienoberfläche und die Komponenten zum Telekommunikationsnetz hin bilden zusammen die Peripherie des Endgerätes. Der interne Austausch der Telefon- bzw. Telekommunikationssignale erfolgt über die Leitung TEL. Die peripheren Komponenten werden von einer Betriebs-Hardware BHW koordiniert, die die vom Benutzer über das Ein/Ausgabefeld EAF eingegebenen Anweisungen sowie andere Signale der Peripherie, z.B. ein Rufsignal des Telefonnetzes oder das beim Abheben des Handapparat-Hörers ausgelöste Gabelsignal, verarbeitet und dementsprechend die Peripherie-Komponenten über Steuersignale steuert. Die Steuer- und Peripheriesignale von bzw. zu der Betriebs-Hardware BHW werden über einen Signalbus SIG ausgetauscht.

In der hier dargestellten Telekommunikationsendeinrichtung TEE weist nun die Betriebs-Hardware BHW einen Block programmierbarer Bausteine PMB auf. Programmierbare Bausteine sind z.B. als PLDs (programmable logic devices) bekannt und können für verschiedene Aufgaben eingesetzt werden, wie z.B. als logisches Gatter, Signalprozessor oder Speicherzelle. Zusätzlich enthält die Betriebs-Hardware BHW einen Speicher STO, in dem Betriebsdaten wie etwa Bildschirmdaten oder häufig verwendete Nutzerdaten abgespeichert sind. In einer aufwendigeren Ausführung kann der Speicher STO auch ein Betriebssystem enthalten. Der Speicher STO ist ein nicht-flüchtiger, wiederprogrammierbarer Nur-Lesespeicher, in dem die Daten bei z.B. einem Ausfall der Stromversorgung nicht verloren gehen, und kann etwa mit Hilfe von EEPROM-Bausteinen realisiert sein. Daneben ist es möglich, einen Schreiblesespeicher (RAM) einzurichten, als festen Bestandteil des Speichers STO und/oder dadurch, daß einige der programmierbaren Bausteine PMB ausgewählt und als RAM-Speicher konfiguriert werden. Die Konfiguration des Endgerätes TEE ist durch die Auswahl der Funktion der einzelnen programmierbaren Bausteine PMB und ihrer Verknüpfungen sowie durch den Inhalt des Speichers STO festgelegt. Um auf die Betriebs-Hardware BHW während des Konfiguriervorganges zugreifen zu können, weist das Endgerät TEE eine Programmierschnittstelle PRM auf, welche wie in Fig. 2b angedeutet über die Programmierbuchse PAN mit einem Computer PRO verbunden wird. Dieser Computer PRO wird nun mit Hilfe einer Konfiguriersoftware als Programmierterminal betrieben. Über das Programmierterminal PRO kann der Benutzer Anweisungen zur Änderung der Konfiguration eingeben und erhält sämtliche Informationen über den Zustand der Konfiguration. Um die Konfigurationsmöglichkeiten zu ermitteln, können zusätzlich mit den peripheren Komponenten Konfiguriersignale ausgetauscht werden, wie in Fig. 2b durch Pfeile angedeutet. Die Programmierschnittstelle PRM dient lediglich zur Abfrage des aktuellen Konfigurationszustandes und zum Umsetzen der Konfigurieranweisungen in die Konfiguration der Betriebs-Hardware BHW. Hingegen liegt die gesamte Durchführung des Konfiguriervorganges auf Seiten des Programmierterminals PRO.

Grundsätzlich ist nur die Betriebs-Hardware BHW über die Programmierschnittstelle PRM konfigurierbar. In besonderen Fällen kann auch eine periphere Komponente konfigurierbare Merkmale aufweisen, die zweckmäßigerweise gemäß der Erfindung programmiert werden sollen. Das Programmieren der peripheren Konfiguration geschieht dann mit Hilfe der über den Signalbus SIG übermittelten Konfiguriersignalen.

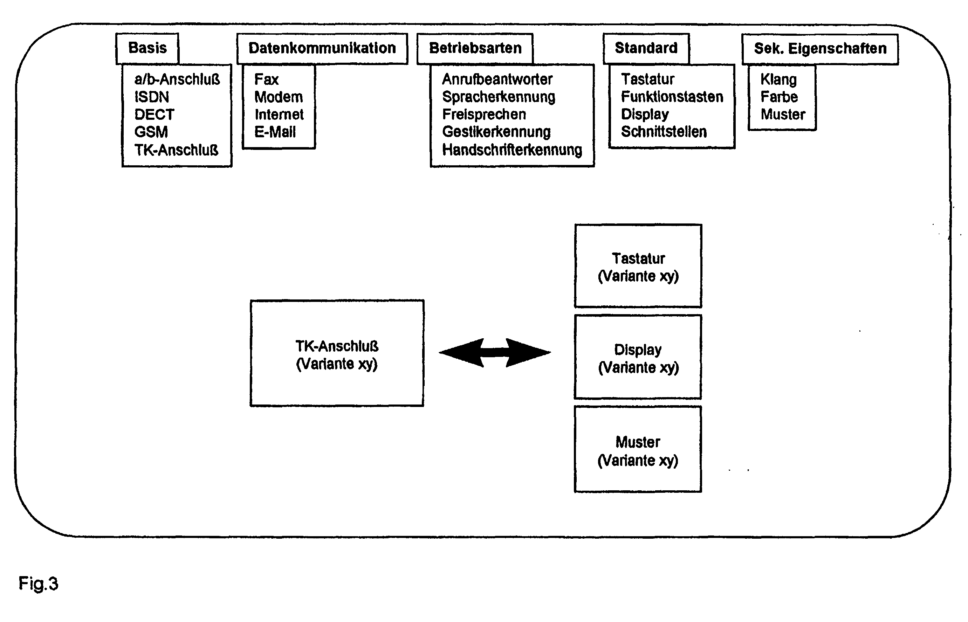

Die auf dem Programmierterminal PRO betriebene Konfiguriersoftware ist günstigerweise mit einer graphischen Oberfläche ausgestattet, bei der die verschiedenen konfigurierbaren Funktionen in Menüs zusammengefaßt sind. Fig. 3 gibt beispielhaft den Bildschirminhalt während des Konfigurierens des oben beschriebenen, individuell konfigurierbaren Telefongerätes wieder. Jedes Element der obersten Menüleiste entspricht einer Gruppe von Auswahlmöglichkeiten, die in diesem Beispiel den oben genannten Merkmalskategorien entsprechen, z.B. entspricht das Menü "Basis" der Basisfunktion und somit dem ausgewählten Telekommunikationssystem. Aus diesen Menüs können nun die einzelnen Funktionsblöcke ausgewählt und konfiguriert und damit eine individuell konfigurierte Telekommunikationsendeinrichtung erstellt werden. Die ausgewählten Funktionsblöcke werden miteinander verknüpft und bilden in ihrer Gesamtheit eine "funktionelle Ansicht" des Endgerätes, wie in der Mitte der Fig. 3 zu sehen ist. Diese funktionelle Ansicht stellt die eingestellte Funktionalität des Endgerätes dar, im Gegensatz z.B. zur "Geräteansicht", die eine Vorschau auf das Aussehen des Endgerätes mit ihren Bedienelementen liefert. Nachdem der Benutzer die gewünschten Merkmale und Merkmalsparameter des Endgerätes ausgewählt bzw. eingestellt hat, stellt die Konfiguriersoftware aufgrund dieser Merkmale ein Konfigurationsmodell für die Betriebs-Hardware des Endgerätes her, das die Programmierung des programmierbaren Baustein-Blocks PMB und deren Verknüpfungen sowie den Inhalt des nicht-flüchtigen Speichers STO umfaßt. Anhand des Konfigurationsmodelles wird die Betriebs-Hardware BHW dann von der Konfiguriersoftware über die Programmierschnittstelle PRM programmiert; dies erfolgt üblicherweise auf einen Befehl des Benutzers hin, wenn dieser zu einer für ihn befriedigenden Konfigurationskonstellation gelangt ist. Diese Methode ist der anderen Möglichkeit, die Programmierung der Betriebs-Hardware laufend ('on line') dem gerade auf dem Programmierterminal PRO bestehenden Merkmalskonzept nachzumodellieren, wegen der Zeitersparnis und der geringeren Fehleranfälligkeit, z.B. bei einer unerwarteten Unterbrechung des Konfiguriervorganges, vorzuziehen.

Wie bereits erwähnt, ist das Programmierterminal PRO gewöhnlicherweise ein Computer, z.B. ein PC, auf dem die Konfiguriersoftware installiert ist und der eine passende Ausgangsschnittstelle für die Verbindung zur Programmierschnittstelle PRM aufweist. Natürlich kann auch ein Computersystem die Aufgaben des Programmierterminals übernehmen, und der Benutzer führt von einem Terminal des Computersystems aus den Konfiguriervorgang durch.

Ein Vorzug der Erfindung liegt darin, daß die Implementierung von erweiterten Merkmalen oder Diensten einfach und anschaulich durchgeführt werden kann. Z.B. kann das oben dargestellte Telefongerät durch eine Anrufbeantworterfunktion erweitert werden. Bei herkömmlichen Endgeräten mußte eine solche Erweiterungsfunktion im vorhinein vorgesehen sein oder ein Zusatzgerät ergänzt werden, z.B. mußte ein Telefongerät die Anrufbeantworterfunktion von Anfang an aufweisen oder mit einem Anrufbeantwortergerät kombiniert werden. Der Erfindung zufolge muß lediglich die Konfiguration des programmierbaren Baustein-Blocks abgeändert werden. So etwa müssen für die erwähnte Anrufbeantworterfunktion einige Bausteine als Speicher konfiguriert werden, um die Anrufernachrichten aufzeichnen zu können. Um die Anrufbeantworterfunktion einzurichten, wählt der Benutzer auf dem Programmierterminal den entsprechenden Menüeintrag aus, gibt die von ihm gewünschten Parameter, z.B. die Höchstanzahl aufgezeichneter Nachrichten, ein und aktiviert bei Bedarf zusätzliche Merkmale, z.B. die zusätzliche Speicherung von Datum und Uhrzeit zu jeder Nachricht. Für die Anrufbeantwortermeldung spricht er über das Mikrofon des Freisprechteiles seine Nachricht ein, oder er wählt aus einem Katalog von als Audiodatenfiles auf dem Programmierterminal gespeicherten Meldungen einen vorgegebenen Text, in den die Rufnummer des Benutzers sprachcodiert an der im Text vorgesehenen Stelle eingefügt wird. Schließlich kann der Benutzer noch das Bildschirmfeld so konfigurieren, daß die Anzahl der eingelangten Anrufe mit der Anrufzeit angezeigt wird oder beispielsweise der Bildschirmhintergrund sich ändert, wenn ein Anruf hinterlassen wird.

Eine weitere erwähnenswerte Erweiterungsmöglichkeit des oben beschriebenen Telefongerät ist ein Telefax-Anzeigegerät. Nachdem das Telefongerät entsprechend konfiguriert wurde, können eingelangte Telefax-Nachrichten auf dem Bildschirm wiedergeben und so vom Benutzer eingesehen werden. Freilich können mit den bestehenden Hardware-Komponenten die Telefax-Nachrichten nur am Bildschirm gelesen werden und nicht ausgedruckt und auch nicht eigene Telefax-Nachrichten versendet werden. Andere Möglichkeiten sind ein Browser-Terminal für das Internet, sodaß das Telefongerät auch als "on-line access device" betrieben werden kann, oder ein Empfangsterminal für elektronische Post (e-mail).

Bei der Konfigurierung von Merkmalen kann es mit Rücksicht auf die unter Umständen eingeschränkten Betriebsmittel des Endgerätes nötig sein, daß bei gewissen Eigenschaften Abstriche zugunsten anderer Eigenschaften gemacht werden müssen. So stehen bei der erwähnten Anrufbeantworterfunktion bei einer bestimmten zur Verfügung stehenden Speichermenge die Qualität der Nachrichtenaufnahme und die Gesamtdauer der gespeicherten Nachrichten in Konkurrenz, und der Benutzer muß entscheiden, ob nur kurze Nachrichten bei sehr guter Aufnahmequalität möglich sein sollen, oder längere Aufnahmezeit bei entsprechend minderer Qualität. In solchen Fällen wird der Benutzer von der Konfiguriersoftware des Programmierterminals über die Auswahlmöglichkeiten informiert und sucht aufgrund dieser Entscheidungshilfen eine seinen Erfordernissen am nächsten kommende Alternative aus.

Wie bereits erwähnt, kann über die Auswahl eines Bildschirmhintergrundes eine individuelle oder firmenspezifische Gestaltung der Telekommunikationsendeinrichtung erfolgen. Der Hintergrund kann in einer von dem Benutzer gewählten einheitlichen Graustufe oder Farbe gehalten sein, aus einem Muster aufgebaut sein oder ein Bild darstellen. Das Hintergrundbild kann z.B. als Punktmatrix von dem Programmierterminal auf das Endgerät übertragen werden. Ein anderes Gestaltungsmittel dieser Art ist z.B. ein Bildschirmschoner, jedoch auch Ton-Wiedergabe, z.B. eine Musikkennung, kann hierfür verwendet werden. Die Tonwiedergabe kann über einen eigens dafür eingerichteten Lautsprecher erfolgen, oder z.B. über den Freisprechteil, oder auch einfach über denselben Sprechkanal wie das Telefongespräch, falls dies nicht als störend empfunden wird. Es ist einer der Vorzüge dieser Erfindung, daß diese zusätzlichen Funktionen ohne nennenswerten Zusatzaufwand in einem erfindungsgemäßen Endgerät installiert werden können.

Die genannten Merkmale sind an sich sekundäre Merkmale, die mit dem Betrieb der Telekommunikationsendeinrichtung als solche nicht zusammenhängen. Im Rahmen der Erfindung jedoch können sie nun mit Betriebsfunktionen verknüpft werden. Wie schon erwähnt, kann z.B. der Wechsel zwischen verschiedenen Hintergrundfarben bzw. -mustern oder -formen auch Informationen an den Benutzer vermitteln; diese Möglichkeit zeichnet sich durch eine gewisse Diskretion aus, da sie für außenstehende nicht unmittelbar einsichtig sein muß.

Schließlich besteht die Möglichkeit, die Ein- und Ausgabe von Informationen über andere Medien zu führen. Hierher gehören z.B. einerseits die Ausgabe von Sprachmeldungen, andererseits die sprach-, gestik- oder handschriftgesteuerte Eingabe von Befehlen. Die Ein- und Ausgabe von z.B. Sprache kann bei Vorhandensein der entsprechenden Sprachbearbeitungseinheiten nach Maßgabe der Zweckmäßigkeit und Bequemlichkeit durch den Benutzer konfiguriert werden. Für die Gestikerkennung müßte das Endgerät mit z.B. einer Kamera ausgestattet werden; die Kamera kann dann auch für andere Aufgaben wie die Übertragung von Bildinformationen genützt werden.

Für die Realisierung einer sprachgesteuerten Ein- bzw. Ausgabe können z.B. zusätzlich ein Vocoder und eine Spracherkennungseinheit als periphere Module eingerichtet sein. Die Spracherkennungseinheit empfängt die gesprochenen Anweisungen des Benutzers über ein eigenes Mikrofon oder über eine andere periphere Komponente, z.B. den Freisprechteil FST, und die interne Leitung TEL, wertet die Sprachsignale aus und leitet entsprechende Information über den Datenbus SIG an die Betriebs-Hardware BHW weiter; entsprechend, allerdings in umgekehrter Richtung, verläuft die Sprachsynthese. Diese peripheren Sprachmodule sind nicht über die Programmierschnittstelle PRM konfigurierbar. Wenn die Sprachbearbeitung konfigurierbar sein soll und genügend Betriebsmittel-Resourcen in der Betrieb-Hardware vorhanden sind, können die Funktionen der Spracherkennung und/oder Sprachsynthese auch von der Betriebs-Hardware BHW nach entsprechender Konfigurierung zur Gänze oder zum Teil übernommen werden. Im Beispiel der Spracherkennung kann die Betriebs-Hardware BHW die gesprochenen Anweisungen vordecodiert über ein Spracherkennungsmodul mit geringerer Kapazität oder direkt von der Leitung TEL entnehmen und verarbeiten.

Um die oben am Beispiel der Telefax-Anzeige erwähnten Einschränkungen hinsichtlich der Ein/Ausgabemittel zu umgehen, kann ein Endgerät auch so gestaltet sein, daß zusätzliche Peripheriekomponenten angefügt werden können. Solche zusätzliche Komponenten sind z.B. ein Drucker- und/oder Scannermodul für die Telefax-Funktion, oder eine Einheit mit Tastatur, um am Gerät kurze e-mail-Nachrichten abzufassen. Hierfür ist in dem Endgerät ein Schnittstellenblock SST, Fig. 2, vorgesehen, der Anschlußplätze für zusätzlichen Peripheriekomponenten bereithält. Um auch dem Benutzer die Erweiterung des Gerätes auf einfache Weise zu ermöglichen, sollten die Anschlußverbindungen des Schnittstellenblocks einfach gestaltet sein, z.B. als einrastende Steckverbindungen. Mit zusätzlichen Hardware-Komponenten aufrüstbare Telekommunikationsgeräte sind an sich bereits bekannt, jedoch ergibt sich in Kombination mit der Erfindung ein Vorteil darin, daß das Grundgerät nun erst zum Zeitpunkt der Erweiterung in Hinsicht auf die Zusatzkomponenten konfiguriert werden muß und nicht von vornherein entsprechende spezifische Betriebsmittel bereitgestellt werden müssen. Das mechanische Zusammenfügen des Endgerätes mit den Zusatzkomponenten geschieht am einfachsten über eine Steckverbindung, wobei die Steckerstifte sowohl den mechanischen Zusammenhalt als auch sämtliche nötigen elektrischen Kontakte liefern können.

Die Komponenten, die auf diese Weise dem Endgerät hinzugefügt bzw. von diesem abgetrennt werden können, sind nicht auf Erweiterungskomponenten wie die oben erwähnten Drucker- und Scannermodule beschränkt. Prinzipiell ist es denkbar, die konfigurierbare Telekommunikationsendeinrichtung so zu realisieren, daß jede Peripherieeinheit entfernt, ausgetauscht, hinzugefügt oder durch zusätzliche Komponenten ergänzt werden kann. Die Einbindung der jeweils am Endgerät vorhandenen Komponenten erfolgt in jedem Falle durch Konfigurieren der Betriebs-Hardware über das Programmierterminal. Dies gilt insbesondere für das Ein/Ausgabefeld EAF. Die Erweiterungsmöglichkeit mit einer Tastatur - ein eigener Telefon-Tastenblock ist ein Variante hierzu - wurde bereits erwähnt, aber auch die Maus und ihre oben genannten Varianten bieten sich hierfür an.

Auch das Telekommunikationsmodul TKM selbst könnte als austauschbare Komponente ausgeführt sein. Auf diese Weise ist ein Wechsel zwischen verschiedenen Telekommunikationssystemen möglich, wobei der überwiegende Teil des Endgerätes gleich bleibt. Falls mehrere Telekommunikationsmodule gleichzeitig angeschlossen sind, wird das Endgerät so konfiguriert, daß der Benutzer für die Nutzung jeweils ein Telekommunikationsnetz auswählen kann, z.B. wird durch Berühren eines Tastenfeld zwischen den vorhandenen verbindbaren Netzen umgeschaltet.

Als Alternative zu den direkt anzuschließenden Komponenten können selbstverständlich auch an der Telekommunikationsendeinrichtung zusätzliche Anschlußstellen ZAN, wie etwa ein V.24-Anschluß, eingerichtet werden, um eigenständige Komponenten ZUS, wie z.B. einen Drucker, über eine Kabelverbindung anzuschließen. Dies geschieht zweckmäßigerweise mit Hilfe des Schnittstellenblockes SST, der wie in Fig. 2a gezeigt die Verbindung zwischen einem Anschluß ZAN einerseits und der internen Telekommunikationsleitung TEL und dem Signalbus SIG herstellt. Das endgeräteseitige Konfigurieren der Anschlüsse ZAN erfolgt wiederum gemäß der Erfindung.

Selbstverständlich ist die oben dargestellte Ausführungsform lediglich als ein Beispiel unter vielen möglichen zu sehen; insbesondere ist die Erfindung nicht nur auf Telefongeräte eines analogen Telefonnetzes eingeschränkt. Vielmehr umfaßt die Erfindung sämtliche Endgeräte von Telekommunikationsnetzen jeglicher Art nach Anspruch 1 bzw. Konfigurierverfahren nach Anspruch 12, die durch den Fachmann realisiert werden können.

## Patentansprüche

1. Konfigurierbare Telekommunikationsendeinrichtung, die programmierbare Bausteine (PMB) für die Ausführung ihrer Betriebsfunktionen und eine Programmierschnittstelle (PRM) aufweist, die mit einem Programmierterminal (PRO) verbindbar ist,
**dadurch gekennzeichnet, daß**
sie dazu eingerichtet ist, auf vom Benutzer am Programmierterminal (PRO) eingebenene und über die genannte Verbindung übermittelte Befehle hin die programmierbaren Bausteine (PMB) zu konfigurieren,
wobei ein Ein/Ausgabefeld (EAF) hinsichtlich Art, Ort und Gestaltung von auf ihm dargestellten Ein/Ausgabeelementen (0 bis 9, FN1, FN2, FN3, ANZ) über die Programmierschnittstelle (PRM) konfigurierbar ist.

2. Telekommunikationsendeinrichtung nach Anspruch 1, **dadurch gekennzeichnet, daß** das Ein/Ausgabefeld (EAF) zumindest teilweise als Sensorbildschirm, Sensorfeld oder Bildschirm ausgebildet ist.

3. Telekommunikationsendeinrichtung nach Anspruch 2, **dadurch gekennzeichnet, daß** zumindest ein Teil des konfigurierbaren Ein/Ausgabefeldes (EAF) als Bildschirm oder Sensorbildschirm in Kombination mit einem Eingabegerät für relative Koordinaten ausgebildet ist.

4. Telekommunikationsendeinrichtung nach einem der Ansprüche 1 bis 3, **gekennzeichnet durch** einen Speicher (STO) zur Aufnahme von Daten und Steuerbefehlen für die programmierbaren Bausteine.

5. Telekommunikationsendeinrichtung nach einem der Ansprüche 1 bis 4, **dadurch gekennzeichnet, daß** die für den Betrieb in einer bestimmten Betriebsart spezifischen Bauteile abnehmbar gestaltet sind, sodaß sie bei einer Umstellung auf eine andere Betriebsart hinzufügbar und nach allfälligem Konfigurieren der Telekommunikationsendeinrichtung in Betrieb zu nehmen sind.

6. Telekommunikationsendeinrichtung nach Anspruch 5, **dadurch gekennzeichnet, daß** die Schnittstellen zu den abnehmbaren Bauteilen so ausgebildet sind, daß die abnehmbaren Bauteile unabhängig von ihrer jeweiligen Funktion an einem beliebigen Schnittstellenplatz der Telekommunikationsendeinrichtung hinzufügbar sind.

7. Telekommunikationsendeinrichtung nach einem der Ansprüche 1 bis 6, **dadurch gekennzeichnet, daß** ihr Ein/Ausgabefeld (EAF) oder ein Teil davon abnehmbar gestaltet und gegen ein anderes Ein/Ausgabefeld austauschbar ist.

8. Telekommunikationsendeinrichtung nach einem der Ansprüche 1 bis 7, **gekennzeichnet durch** eine Bild/Ton-Ausgabeeinheit für Informationen und Meldungen zu den Betriebsarten und -funktionen der Telekommunikationsendeinrichtung an den Benutzer.

9. Telekommunikationsendeinrichtung nach einem der Ansprüche 1 bis 8, **gekennzeichnet durch** eine Sprachausgabeeinheit für Informationen und Meldungen zu den Betriebsarten und -funktionen der Telekommunikationsendeinrichtung an den Benutzer.

10. Telekommunikationsendeinrichtung nach einem der Ansprüche 1 bis 9, **gekennzeichnet durch** eine Erkennungseinheit für Eingaben des Benutzers über zumindest eine der folgenden Medien: Sprache, Gestik, Handschrift.

11. Verfahren zum Konfigurieren einer Telekommunikationsendeinrichtung, wobei die Telekommunikationsendeinrichtung mit einem Programmierterminal über eine in der Telekommunikationsendeinrichtung eingerichtete Schnittstelle verbunden wird,
**dadurch gekennzeichnet, daß**
der Benutzer das Konfigurieren der konfigurierbaren Bauteile der Telekommunikationsendeinrichtung über die genannte Verbindung von dem Programmierterminal aus durchführt,
wobei ein Ein/Ausgabefeld (EAF) hinsichtlich Art, Ort und Gestaltung von auf ihm dargestellten Ein/Ausgabeelementen (0 bis 9, FN1, FN2, FN3, ANZ) über die Programmierschnittstelle (PRM) konfiguriert werden.

12. Verfahren nach Anspruch 11, **dadurch gekennzeichnet, daß** die Telekommunikationsendeinrichtung hinsichtlich zumindest einer der folgenden Merkmalskategorien konfiguriert wird: Basisfunktion, Betriebsart, Betriebsfunktionen.

13. Verfahren nach Anspruch 11 oder 12, **dadurch gekennzeichnet, daß** der Benutzer die Konfigurierung unter Verwendung einer graphischen Bedienoberfläche mit Hilfe von Funktionsblöcken durchführt.

14. Verfahren nach Anspruch 13, **dadurch gekennzeichnet, daß** die Funktionsblöcke verschiedenen Basisfunktionen, Betriebsarten, Betriebsfunktionen, Ein/Ausgabefunktionen oder zusätzlichen, nur mittelbar dem Telekommunikationsbetrieb zugeordneten Eigenschaften der Telekommunikationsendeinrichtung entsprechen.

15. Verfahren nach einem der Ansprüche 11 bis 14, **dadurch gekennzeichnet, daß** die für den Betrieb in einer bestimmten Betriebsart der Telekommunikationsendeinrichtung spezifischen Bauteile hinzugefügt werden, und die Telekommunikationsendeinrichtung hinsichtlich des Betriebs dieser Bauteile konfiguriert wird.

16. Verfahren nach einem der Ansprüche 11 bis 15, **dadurch gekennzeichnet, daß** das Ein/Ausgabefeld der Telekommunikationsendeinrichtung oder ein Teil davon abgenommen und gegen ein anderes Ein/Ausgabefeld ausgetauscht wird.

17. Verfahren nach einem der Ansprüche 11 bis 16, **dadurch gekennzeichnet, daß** eine Bild/Ton-Ausgabeeinheit für Informationen und Meldungen zu den Betriebsarten und -funktionen der Telekommunikationsendeinrichtung an den Benutzer konfiguriert wird.

18. Verfahren nach einem der Ansprüche 11 bis 17, **dadurch gekennzeichnet, daß** eine Sprachausgabeeinheit für Informationen und Meldungen zu den Betriebsarten und -funktionen der Telekommunikationsendeinrichtung an den Benutzer konfiguriert wird.

## Claims

1. Configurable telecommunication terminal which comprises programmable modules (PMB) for executing its operating functions and a programming interface (PRM) which can be connected to a programming terminal (PRO),
**characterised in that**
it is set up to configure the programmable modules (PMB) in accordance with commands input by the user at the programming terminal (PRO) and transmitted over the said connection,
with an input/output field (EAF) being configurable via the programming interface (PRM) with regard to type, position and arrangement of input/output elements (0 to 9, FN1, FN2, FN3, ANZ) displayed on said input/output field (EAF).

2. Telecommunication terminal according to claim 1, **characterised in that** the input/output field (EAF) is embodied at least partially as a sensor screen, sensor field or display.

3. Telecommunication terminal according to claim 2, **characterised in that** at least a part of the configurable input/output field (EAF) is embodied as a display or sensor screen in combination with an input device for relative coordinates.

4. Telecommunication terminal according to one of the claims 1 to 3, **characterised by** a memory (STO) for storing data and control commands for the programmable modules.

5. Telecommunication terminal according to one of the claims 1 to 4, **characterised in that** the specific components intended for operation in a particular operating mode are designed to be removable so that they can be added in the event of a switch to a different operating mode and are to be put into operation following possible configuration of the telecommunication terminal.

6. Telecommunication terminal according to claim 5, **characterised in that** the interfaces to the removable components are embodied in such a way that the removable components can be added at any interface slot of the telecommunication terminal regardless of their respective function.

7. Telecommunication terminal according to one of the claims 1 to 6, **characterised in that** its input/output field (EAF) or a part thereof is designed to be removable and can be replaced by another input/output field.

8. Telecommunication terminal according to one of the claims 1 to 7, **characterised by** an audiovisual output unit for relaying information and messages relating to the operating modes and functions of the telecommunication terminal to the user.

9. Telecommunication terminal according to one of the claims 1 to 8, **characterised by** a voice output unit for relaying information and messages relating to the operating modes and functions of the telecommunication terminal to the user.

10. Telecommunication terminal according to one of the claims 1 to 9, **characterised by** a recognition unit for inputs of the user via at least one of the following media: voice, gestures, handwriting.

11. Method for configuring a telecommunication terminal, wherein the telecommunication terminal is connected to a programming terminal via an interface incorporated in the telecommunication terminal,
**characterised in that**
the user performs the configuration of the configurable components of the telecommunication terminal via the aforesaid connection from the programming terminal, with an input/output field (EAF) being configured via the programming interface (PRM) with regard to type, position and arrangement of input/output elements (0 to 9, FN1, FN2, FN3, ANZ) displayed on said input/output field (EAF).

12. Method according to claim 11, **characterised in that** the telecommunication terminal is configured with regard to at least one of the following feature categories: basic function, operating mode, operating functions.

13. Method according to claim 11 or 12, **characterised in that** the user performs the configuration using a graphical user interface with the aid of function blocks.

14. Method according to claim 13, **characterised in that** the function blocks correspond to different basic functions, operating modes, operating functions, input/output functions or additional features of the telecommunication terminal that are only indirectly associated with telecommunications operation.

15. Method according to one of the claims 11 to 14, **characterised in that** the specific components intended for operation in a particular operating mode of the telecommunication terminal are added and the telecommunication terminal is configured with regard to the operation of these components.

16. Method according to one of the claims 11 to 15, **characterised in that** the input/output field of the telecommunication terminal or a part thereof is removed and replaced by another input/output field.

17. Method according to one of the claims 11 to 16, **characterised in that** an audiovisual output unit is configured for relaying information and messages relating to the operating modes and functions of the telecommunication terminal to the user.

18. Method according to one of the claims 11 to 17, **characterised in that** a voice output unit is configured for relaying information and messages relating to the operating modes and functions of the telecommunication terminal to the user.

## Revendications

1. Terminal de télécommunication configurable, lequel comporte des éléments programmables (PMB) pour exécuter ses fonctions de service et une interface de programmation (PRM) qui est connectable à un terminal de programmation (PRO),
**caractérisé en ce**
**qu'**il est aménagé pour configurer les éléments programmables (PMB) sur ordres introduits par l'utilisateur au niveau du terminal de programmation (PRO) et transmis par l'intermédiaire de ladite connexion, un champ d'entrée/sortie (EAF) étant configurable par l'intermédiaire de l'interface de programmation (PRM) pour ce qui est du type, de l'emplacement et de l'organisation d'éléments d'entrée/sortie représentés sur lui-même (0 à 9, FN1, FN2, FN3, ANZ).

2. Terminal de télécommunication selon la revendication 1, **caractérisé en ce que** le champ d'entrée/sortie (EAF) est réalisé du moins en partie en tant qu'écran tactile, champ tactile ou écran.

3. Terminal de télécommunication selon la revendication 2, **caractérisé en ce qu'**au moins une partie du champ d'entrée/sortie configurable (EAF) est réalisé en tant qu'écran ou écran tactile en combinaison avec un appareil de saisie pour des coordonnées relatives.

4. Terminal de télécommunication selon l'une des revendications 1 à 3, **caractérisé par** une mémoire (STO) pour l'enregistrement de données et d'ordres de contrôle pour les éléments programmables.

5. Terminal de télécommunication selon l'une des revendications 1 à 4, **caractérisé en ce que** les composants spécifiques au fonctionnement dans un mode de fonctionnement déterminé sont réalisés de manière amovible de sorte qu'ils peuvent être ajoutés en cas de passage à un autre mode de fonctionnement et qu'ils sont à mettre en service après une éventuelle configuration du terminal de télécommunication.

6. Terminal de télécommunication selon la revendication 5, **caractérisé en ce que** les interfaces vers les composants amovibles sont réalisées de manière telle que les composants amovibles peuvent, indépendamment de leur fonction respective, être ajoutés à un emplacement d'interface quelconque du terminal de télécommunication.

7. Terminal de télécommunication selon l'une des revendications 1 à 6, **caractérisé en ce que** son champ d'entrée/sortie (EAF), ou une partie de celui-ci, est réalisé de manière amovible et peut être remplacé par un autre champ d'entrée/sortie.

8. Terminal de télécommunication selon l'une des revendications 1 à 7, **caractérisé par** une unité de sortie d'images/sons pour des informations et des messages adressés à l'utilisateur et concernant les modes de fonctionnement et les fonctions de service du terminal de télécommunication.

9. Terminal de télécommunication selon l'une des revendications 1 à 8, **caractérisé par** une unité de sortie vocale pour des informations et des messages adressés à l'utilisateur et concernant les modes de fonctionnement et les fonctions de service du terminal de télécommunication.

10. Terminal de télécommunication selon l'une des revendications 1 à 9, **caractérisé par** une unité de reconnaissance des entrées de l'utilisateur par l'intermédiaire d'au moins l'un des moyens suivants: la voix, la gestique, l'écriture manuscrite.

11. Procédé pour configurer un terminal de télécommunication, le terminal de télécommunication étant connecté à un terminal de programmation par l'intermédiaire d'une interface aménagée dans le terminal de télécommunication, **caractérisé en ce que** l'utilisateur effectue la configuration des composants configurables du terminal de télécommunication par l'intermédiaire de ladite connexion à partir du terminal de programmation, un champ d'entrée/sortie (EAF) étant configuré par l'intermédiaire de l'interface de programmation (PRM) pour ce qui est du type, de l'emplacement et de l'organisation d'éléments d'entrée/sortie représentés sur lui-même (0 à 9, FN1, FN2, FN3, ANZ).

12. Procédé selon la revendication 11, **caractérisé en ce que** le terminal de télécommunication est configuré pour ce qui est d'au moins l'une des catégories de caractéristiques suivantes: fonction de base, mode de fonctionnement, fonctions de service.

13. Procédé selon la revendication 11 ou 12, **caractérisé en ce que** l'utilisateur effectue la configuration en utilisant une surface de commande graphique à l'aide de blocs fonctionnels.

14. Procédé selon la revendication 13, **caractérisé en ce que** les blocs fonctionnels correspondent à différents fonctions de base, modes de fonctionnement, fonctions de service, fonctions d'entrée/sortie ou caractéristiques additionnelles du terminal de télécommunication qui ne sont affectées qu'indirectement au service télécommunication.

15. Procédé selon l'une des revendications 11 à 14, **caractérisé en ce que** les composants spécifiques pour le fonctionnement dans un mode de fonctionnement déterminé du terminal de télécommunication sont ajoutés et le terminal de télécommunication est configuré pour ce qui est du fonctionnement de ces composants.

16. Procédé selon l'une des revendications 11 à 15, **caractérisé en ce que** le champ d'entrée/sortie du terminal de télécommunication, ou une partie de celui-ci, est retiré et remplacé par un autre champ d'entrée/sortie.

17. Procédé selon l'une des revendications 11 à 16, **caractérisé en ce qu'**on configure une unité de sortie d'images/sons pour des informations et des messages adressés à l'utilisateur et concernant les modes de fonctionnement et les fonctions de service du terminal de télécommunication.

18. Procédé selon l'une des revendications 11 à 17, **caractérisé en ce qu'**on configure une unité de sortie vocale pour des informations et des messages adressés à l'utilisateur et concernant les modes de fonctionnement et les fonctions de service du terminal de télécommunication.
